# EUROPÄISCHE PATENTSCHRIFT

(11) **EP 3 735 372 B1**
(45) Veröffentlichungstag und Bekanntmachung des Hinweises auf die Patenterteilung: **31.03.2021**
(21) Anmeldenummer: 18833426.2
(22) Anmeldetag: 20.12.2018
(51) Int. Cl.: B62D 53/12, B60D 1/01, B60D 1/62, H02G 11/00

(54) **VORRICHTUNG ZUM ÜBERFÜHREN EINER LEITUNG ZWISCHEN EINEM EINGEFAHRENEN ZUSTAND UND EINEM AUSGEFAHRENEN ZUSTAND SOWIE ENTSPRECHENDES SYSTEM, ENTSPRECHENDE VERWENDUNG UND ENTSPRECHENDES VERFAHREN**
DEVICE FOR TRANSITIONING A LINE BETWEEN A RETRACTED STATE AND AN EXTENDED STATE AND CORRESPONDING SYSTEM, CORRESPONDING USE AND CORRESPONDING METHOD
DISPOSITIF DE TRANSFERT D'UN CONDUIT ENTRE UN ÉTAT RÉTRACTÉ ET UN ÉTAT DÉPLOYÉ, ET SYSTÈME CORRESPONDANT, UTILISATION CORRESPONDANTE ET PROCÉDÉ CORRESPONDANT

(30) Priorität: 02.01.2018 DE 102018100025
(43) Veröffentlichungstag der Anmeldung: 11.11.2020
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2018/086303
(87) Internationale Veröffentlichungsnummer: WO 2019/134848

(56) Entgegenhaltungen:
- EP-A1- 0 539 860
- EP-A2- 0 127 146
- US-A- 3 653 686
- US-A1- 2012 153 597

## Beschreibung

Die vorliegende Erfindung betrifft eine Vorrichtung zum Überführen einer Leitung zwischen einem eingefahrenen Zustand und einem ausgefahrenen Zustand, ein System zum Überführen einer Leitung zwischen einem eingefahrenen Zustand und einem ausgefahrenen Zustand, eine Verwendung der Vorrichtung und ein Verfahren zum Bereitstellen der Vorrichtung.

Bei aus dem Stand der Technik bekannten Sattelzügen und Sattelaufliegern wird der Sattelauflieger mittels eines Königszapfens an eine sattelzugseitige Sattelkopplung mechanisch angebunden. Für eine erfolgreiche Ankupplung, insbesondere vollständig automatische Ankupplung, ist es darüber hinaus vorgesehen, dass aufliegerseitige Leitungen und sattelzugsseitige Leitungen bzw. Versorgungsleitungen, wie z. B. Luftdruckleitungen oder elektrische Leitungen, miteinander verbunden werden. Um eine Ankopplung auch bei schräg zueinander ausgerichteten Sattelaufliegern und Sattelzügen zu realisieren, kennt der Stand der Technik zudem Kopplungskomponente bzw. Ausleger, die schwenkbar gegenüber dem Königszapfen gelagert sind. Solche Kopplungskomponenten bzw. Ausleger dienen der Führung bzw. Lagerung der Leitungen. Da die Leitungen bei diesen Schwenkbewegungen mitgeführt werden, müssen entsprechende Maßnahmen zu deren Längenänderung vorgenommen werden, um Schädigungen an den Leitungen zu vermeiden oder die Bewegungsfreiheit der Schwenkbewegung der Kopplungskomponente nicht einzuschränken. Aus dem Stand der Technik ist die Verwendung einer Kabeltrommel bekannt, auf die ein Teil der Leitung aufgewickelt wird, um gezielt Längenänderung zu veranlassen, die mit der Schwenkbewegung der Kopplungskomponente abgestimmt sind.

EP 0 127 146 A2 betrifft ein gleisloses Untertagefahrzeug mit einer Kupplung mit mechanischen Haltemitteln und fernbetätigbaren hydraulischen und elektrischen Steckverbindern.

US 2012/0153597 A1 und US-3,653,686 betreffen Fahrzeugkupplungen, mittels welchen elektrische und/oder hydraulische/pneumatische Energie zwischen dem Zugfahrzeug und dem gezogenen Fahrzeug übertragen werden können.

EP 0 539 860 A1 betrifft einen Sattelzug, bei welchem Zugfahrzeug und Trailer über eine Mehrzahl von Versorgungsleitungen verbunden sind.

Ausgehend von diesem Hintergrund macht es sich die vorliegende Erfindung zur Aufgabe, eine alternative bzw. verbesserte Vorrichtung bereitzustellen, mit der eine Längenänderung von Leitungen im Schnittstellenbereich zwischen einem Sattelzug und einem Sattelauflieger gezielt eingestellt werden kann.

Diese Aufgabe wird gelöst durch eine Vorrichtung gemäß Anspruch 1. Weitere Vorteile und Merkmale der Erfindung ergeben sich aus den Unteransprüchen sowie der Beschreibung und den beigefügten Figuren.

Erfindungsgemäß ist eine Vorrichtung zur Überführung einer Leitung zwischen einem eingefahrenen Zustand und einem ausgefahrenen Zustand vorgesehen, wobei die Leitung in einem Schnittstellenbereich zwischen einem Sattelzug und einem Sattelauflieger angeordnet ist, wobei die Leitung einen ersten Leitungsabschnitt und einen zweiten Leitungsabschnitt aufweist und wobei die Leitung im ausgefahrenen Zustand länger ist als im eingefahrenen Zustand, wobei die Vorrichtung ein Mantelelement umfasst, über das der erste Leitungsabschnitt und der zweite Leitungsabschnitt unter Ausbildung eines Teleskopmechanismus verbindbar sind bzw. verbunden sind, insbesondere als einzelne Bauteile dauerhaft miteinander verbunden sind. Gegenüber dem Stand der Technik erweist sich das erfindungsgemäße teleskopartige Koppeln zwischen dem ersten Leitungsabschnitt und dem zweiten Leitungsabschnitt insofern als vorteilhaft, als dass auf eine bauraumfüllende Konstruktion zum Aufwickeln der Leitungen verzichtet werden kann. Das Mantelelement kann dabei Teil des zweiten Leitungsabschnitts sein oder mit diesem starr verbunden sein. Insbesondere ist es vorgesehen, dass durch die teleskopartige Kopplung die Überführung zwischen einem ausgefahrenen Zustand und einem eingefahrenen Zustand durch einen translatorischen Versatz, vorzugsweise einen geradlinigen translatorischen Versatz, erfolgt. Dabei wird bevorzugt der translatorische Versatz zwischen dem ersten Leitungsabschnitt und dem Mantelelement bedingt. Vorstellbar ist es dabei, dass der erste Leitungsabschnitt fixiert bzw. lagegesichert ist und das Mantelelement längsverschiebbar, d. h. entlang einer Richtung, die durch seine Längsachse vorgegeben ist, am ersten Leitungsabschnitt gelagert ist. Vorzugsweise sind die Leitungen Versorgungsleitungen, wie z. B. eine Luftdruckleitung und/oder eine elektrische Leitung. Grundsätzlich ist unter dem Schnittstellenbereich ein solcher Bereich zu verstehen, der alle Komponenten erfasst, die zur Kopplung eines Sattelaufliegers an einen Sattelzug beitragen. Insbesondere handelt es sich um einen Bereich, der weniger als 2 m vom Königszapfen entfernt ist. Vorzugsweise ist die Vorrichtung im montierten Zustand Teil des Sattelaufliegers bzw. an einer Unterseite des Sattelaufliegers montiert. Bevorzugt ist es vorgesehen, dass das Mantelelement einen zylinderförmigen, insbesondere hülsenförmigen, Grundkörper aufweist. Weiterhin ist es vorgesehen, dass eine Längsachse des Mantelelements parallel zur Translationsrichtung verläuft, entlang der ein Ein- und Ausschieben der teleskopartig miteinander verbundenen ersten und zweiten Leitungsabschnitte erfolgt. Weiterhin ist es vorgesehen, dass durch eine Längserstreckung des Mantelelements eine maximale Längenänderung festgelegt ist. Insbesondere ist es vorgesehen, dass die Vorrichtung zum Überführen der Leitung zwischen dem eingefahrenen Zustand und dem ausgefahrenen Zustand mit einer Schwenkbewegung einer Kopplungskomponente bzw. eines Auslegers gekoppelt, d. h. wirkverbunden ist. Dabei ist es vorgesehen, dass bei einem Verschwenken der Kopplungskomponente aus einer Zentrallage, in der das Kopplungskomponente im Wesentlichen parallel zu einer gedachten Mittelachse längs des Sattelaufliegers ausgerichtet ist, eine Überführung vom eingefahrenen Zustand in einen ausgefahrenen Zustand erfolgt.

Dabei sind der erste Leitungsabschnitt und der zweite Leitungsabschnitt als zueinander verschiebbare bzw. verlagerbare, eigenständige Bauteil zu verstehen. Insbesondere bilden der erste und der zweite Leitungsabschnitt eine zusammengesetzte Leitung und die gesamte Vorrichtung mit seiner Leitung schließt sich im Schnittstellenbereich mittelbar bzw. unmittelbar an eine Kopplung bzw. einen Stecker an. Vorzugsweise bildet die Vorrichtung dabei keinen Teil einer Steckvorrichtung, d. h. über die Vorrichtung selbst erfolgt keine Verbindung. Stattdessen lässt sich die Leitung mit der Vorrichtung auf einer Seite des Schnittstellenbereichs auf Spannung halten. Vorzugsweise sind der erste Leitungsabschnitt und der zweite Leitungsabschnitt miteinander dauerhaft verbunden, auch wenn sie zueinander verlagerbar sind, um so zwischen einem eingefahrenen Zustand und einem ausgefahrenen Zustand überführt werden kann. Vorzugsweise besteht zwischen dem ersten und dem zweiten Leitungsabschnitt ein dauerhafter Kontakk, auch wenn es sich um zwei zueinander verlagerbare Bauteile handelt.

Ferner ist es dabei vorgesehen, dass der erste Leitungsabschnitt und/oder der zweite Leitungsabschnitt zumindest teilweise, insbesondere vollständig, durch das Mantelelement bzw. innerhalb des Mantelelements verläuft. Entsprechend ist es insbesondere vorgesehen, dass das Mantelelement einen Kanal bzw. einen Kabelkanal für die Leitung bereitstellt. Beispielsweise ist das Mantelelement nicht Teil des zweiten Leitungsabschnitts.

Weiterhin ist es bevorzugt vorgesehen, wenn der erste Leitungsabschnitt und/oder der zweite Leitungsabschnitt bzw. das Mantelelement im Wesentlichen parallel zur Fahrzeuglängsachse ausgerichtet sind, insbesondere in einem nicht-ausgelenkten Zustand. Ferner ist es vorgesehen, dass zum Ankoppeln der Leitung diese in einer parallel zur Fahrzeuglängsachse verlaufenden Richtung verschiebbar gelagert ist mittels des Teleskopmechanismus. Insbesondere ist es vorgesehen, dass mit dem Teleskopmechanismus keine Schwenkbewegung der Leitungen zum Koppeln vorgenommen wird, sondern der Teleskopmechanismus zum gezielten Längenausgleich der Leitungen vorgesehen ist, der während einer Kupplung erfolgt.

Zweckmäßig ist das Mantelelement in einer Halteeinrichtung translatorisch verschiebbar oder verlagerbar gelagert. Durch die Lagerung des Mantelelements in der Halteeinrichtung lässt sich das Mantelelement bei der Überführung zwischen dem eingefahrenen Zustand und dem ausgefahrenen Zustand verlagern. Hierfür umfasst die Halteeinrichtung eine Ausnehmung, insbesondere eine runde Ausnehmung, durch die das Mantelelement im zusammengesetzten Zustand durchgreift. Vorzugsweise ist die Ausnehmung (spielbehaftet) passgenau zum Außenumfang des Mantelelements ausgestaltet. Dabei ist die Ausnehmung in der Translationsrichtung, entlang der das Mantelelement verschiebbar ist, gesehen derart breit gestaltet, dass das Mantelelement in der Halteinrichtung ausgerichtet und gehalten wird. D. h. die Ausnehmung legt die Translationsrichtung, entlang der das Mantelelement im Betrieb verschoben wird, fest.

Vorzugsweise ist das Mantelelement über ein Federelement mit der Halteeinrichtung verbunden, wobei das Federelement in einem ausgefahrenen Zustand der Leitung vorgespannt ist. Durch die Vorspannung wird mit Vorteil das Mantelelement automatisch in den eingefahrenen Zustand rückgeführt. Durch die Wirkverbindung zu der Kopplungskomponente ist es dabei mit Vorteil möglich, dass die Kopplungskomponente wieder in ihre Zentrallage, vorzugsweise automatisch, zurückkehrt. Beispielsweise ist das Federelement als Spiralfeder ausgestaltet, die um den Außenumfang des Mantelelements gewickelt ist. Dadurch unterstützt und stabilisiert das Mantelelement mit Vorteil die Ausrichtung des Federelements. Weiterhin ist es vorgesehen, dass sich das Federelement mit seinem einen Ende an der Halteeinrichtung abstützt, insbesondere in einem sich unmittelbar an die Ausnehmung anschließenden Bereich der Halteeinrichtung. Mit dem gegenüberliegenden anderen Ende stützt sich das Federelement an einem von dem Mantelelement abstehenden Kragen ab. Der Kragen kann dabei geschlossen oder unterbrochen ausgestaltet sein und steht vorzugsweise senkrecht von dem Mantelelement, insbesondere dessen Außenumfang ab. Weiterhin ist es vorstellbar, dass an der Halteeinrichtung und/oder am Kragen eine Nut oder Rille vorgesehen ist, in die das Federelement im montierten Zustand mit seinen Enden eingreift. Dadurch lässt sich das Federelement gegenüber einem versehentliches Verrutschen in radialer Richtung sichern.

Zweckmäßig ist es vorgesehen, dass das Mantelelement über ein Kabelelement mit einer schwenkbar gelagerten Kopplungskomponente, insbesondere einem Ausleger, verbunden ist. Dadurch lässt sich die Vorrichtung mit Vorteil synchron zu einer Schwenkbewegung der Kopplungskomponente von einem eingefahrenen Zustand in einen ausgefahren Zustand überführen. Vorzugsweise ist das Kabelelement getrennt von den Leitungen, so dass die Vorrichtung von einem eingefahrenen Zustand in einen ausgefahrenen Zustand überführbar ist, ohne dass eine Zugkraft über die Leitung, insbesondere über den zweiten Leitungsabschnitt, auf die Vorrichtung wirken muss. Hierzu ist es beispielsweise vorstellbar, dass das Kabel an dem Mantelelement angebunden ist und vorzugsweise zumindest bereichsweise parallel zu der Translationsrichtung des Mantelelements ausgerichtet ist. Vorzugsweise ist das Kabel zwischen dem Mantelelement und der Kopplungskomponente im eingefahrenen Zustand der Leitung unter Spannung, während der zweite Leitungsabschnitt im eingefahrenen Zustand ein wenig durchhängt, d. h. nicht unter Spannung steht. Dadurch kann eine Überführung vom eingefahrenen Zustand in den ausgefahren Zustand bereits beginnen, bevor der zweite Leitungsabschnitt unter Spannung gestellt wird. Dies schont die Leitung zusätzlich.

Vorzugsweise umfasst das Kabelelement einen Stahldraht als zentrale Faser. Dadurch wird die Belastbarkeit des Kabelelements weiter verbessert.

Zweckmäßig ist das Mantelelement derart mit der Kopplungskomponente verbunden, dass beim Verschwenken der Kopplungskomponente der erste Leitungsabschnitt und der zweite Leitungsabschnitt zueinander translatorisch verschoben werden. Insbesondere ist es vorgesehen, dass der Versatz des Mantelelements mit der Schwenkbewegung der Kopplungskomponente abgestimmt ist. D. h. je weiter die Kopplungskomponente verschwenkt wird, desto weiter wird das Mantelelement gegenüber der Halteeinrichtung verschoben. Dabei ist es vorzugsweise vorgesehen, dass bei einer maximalen Auslenkung des Kopplungskomponente das Mantelelement noch nicht oder gerade seine maximal mögliche Translationsweite zurückgelegt hat.

Vorzugsweise ist es vorgesehen, dass ein erster Leitungsabschnitt mittels einer weiteren Halteeinrichtung fixiert ist, insbesondere gegenüber der Halteeinrichtung fixiert ist. Entsprechend wird das Mantelelement, das ein Ende des ersten Leitungsabschnitts hülsenförmig umgibt, gegenüber dem ortsfest fixierten ersten Leitungsabschnitt verschoben. Mittels der weiteren Halteeinrichtung wird mit Vorteil der erste Leitungsabschnitt so ausgerichtet, dass dessen Ende in das Mantelelement eingreift. Dabei ist es vorgesehen, dass ein Verhältnis zwischen einer Längserstreckung des Mantelelements zu einem Abstand zwischen der Halteeinrichtung und der weiteren Halteeinrichtung einen Wert zwischen 0,6 und 0,9, bevorzugt zwischen 0,65 und 0,85 und besonders bevorzugt zwischen 0,68 und 0,78 annimmt. Es hat sich herausgestellt, dass sich bei Verhältnissen zwischen 0,68 und 0,78 die weitere Halteeinrichtung derart angeordnet ist, dass ein ausreichender Abstand zwischen dem Mantelelement und der weiteren Halteeinrichtung vorliegt und gleichzeitig eine kompakte Vorrichtung zum Überführen der Leitung zwischen dem eingefahrenen und dem ausgefahrenen Zustand bereitgestellt wird.

Erfindungsgemäß ist die Leitung eine Gasdruckleitung, wobei der erste Leitungsabschnitt gasdicht in dem Mantelelement geführt ist. Insbesondere ist der erste Leitungsabschnitt an seinem in das Mantelelement eingreifenden Ende derart koaxial ausgestaltet bzw. dimensioniert, dass durch das Anliegen des ersten Leitungsabschnitts an einer Innenseite des Mantelelements die Leitung, insbesondere im Bereich der Vorrichtung, angedichtet ist. Es ist dabei auch vorstellbar, dass der erste Leistungsabschnitt mit seinem in das Mantelelement eingreifenden Ende gegen die Innenseite des Mantelelements verspannt ist, um so das Abdichten sicherzustellen.

Erfindungsgemäß ist die Leitung eine elektrische Leitung. Dabei ist es mit Vorteil vorgesehen, dass der elektrische Kontakt zwischen dem ersten Leitungsabschnitt und dem zweiten Leitungsabschnitt während der Überführung zwischen dem eingefahrenen Zustand und dem ausgefahrenen Zustand aufrechterhalten bleibt. Dadurch wird mit Vorteil verhindert, dass bei einer Schwenkbewegung der Kopplungskomponente der elektrische Kontakt zwischen Sattelzug und Sattelanhänger unterbrochen wird.

Erfindungsgemäß ist zur Aufrechterhaltung eines elektrischen Kontakts ein leitfähiges Hülsenelement vorgesehen, wobei das leitfähige Hülsenelement sowohl in einem eingefahrenen Zustand als auch in einem ausgefahrenen Zustand in elektrischem Kontakt zu einem elektrisch leitenden Teil des ersten Leitungsabschnitts steht. Dabei ist es insbesondere vorgesehen, dass ein elektrischer Kontakt entlang umlaufender Innen- bzw. Außenflächen des Hülsenelements und des elektrisch leitenden Teils des ersten Leitungsabschnitts bereitgestellt wird. Beim Überführen zwischen dem eingefahrenen und dem ausgefahrenen Zustand wird das Hülsenelement gegenüber dem elektrisch leitenden Teil des ersten Leitungsabschnitts verschoben, ohne dass der elektrische Kontakt unterbrochen wird.

Zweckmäßig ist für eine Vorrichtung eine Vielzahl von Mantelelementen miteinander verbunden, die vorzugsweise jeweils für eine einzelne Leitung vorgesehen sind. Beispielsweise sind die mehreren Mantelelemente über einen gemeinsamen Träger miteinander verbunden. Dadurch lassen sich mehrere Leitungen in einer Vorrichtung bündeln und synchron und im gleichen Maße in ihrer Länge ändern. Für Wartungs- bzw. Reparaturmaßnahmen hat es sich zudem als vorteilhaft erwiesen, wenn jeweils ein Mantelelement für eine einzelne Leitung vorgesehen ist. Dies vereinfacht mit Vorteil den Austausch von wartungsanfälligen bzw. reparaturbedürftigen Leitungen.

Weiterhin kann eine Verwendung einer Vorrichtung zur Überführung einer Leitung mit einem ersten Leitungsabschnitt und einem zweiten Leitungsabschnitt zwischen einem eingefahren Zustand und einem ausgefahrenen Zustand vorgesehen sein, wobei zur Überführung ein Mantelelement verwendet wird, über das der erste Leitungsabschnitt und der zweite Leitungsabschnitt teleskopartig miteinander verbunden sind. Alle für die erfindungsgemäße Vorrichtung beschriebenen Merkmale und deren Vorteile lassen sich sinngemäß ebenfalls auf die erfindungsgemäße Verwendung übertragen und andersherum.

Weiterhin kann ein System zur Überführung einer Leitung mit einem ersten Leitungsabschnitt und einem zweiten Leitungsabschnitt zwischen einem eingefahren Zustand und einem ausgefahrenen Zustand vorgesehen sein, wobei das System ein Mantelelement umfasst, über das der erste Leitungsabschnitt und der zweite Leitungsabschnitt teleskopartig miteinander verbunden sind. Alle für die erfindungsgemäße Vorrichtung beschriebenen Merkmale und deren Vorteile lassen sich sinngemäß ebenfalls auf das erfindungsgemäße System übertragen und andersherum.

Weiterhin kann ein Verfahren zum Bereitstellen einer Vorrichtung zur Überführung einer Leitung mit einem ersten Leitungsabschnitt und einem zweiten Leitungsabschnitt zwischen einem eingefahren Zustand und einem ausgefahrenen Zustand vorgesehen sein, wobei die Vorrichtung ein Mantelelement umfasst, mit dem der erste Leitungsabschnitt und der zweite Leitungsabschnitt zu deren teleskopartigen Lagerung verbunden werden. Alle für die erfindungsgemäße Vorrichtung beschriebenen Merkmale und deren Vorteile lassen sich sinngemäß ebenfalls auf das erfindungsgemäße Verfahren übertragen und andersherum.

Weitere Vorteile und Merkmale ergeben sich aus der nachfolgenden Beschreibung bevorzugter Ausführungsformen des erfindungsgemäßen Gegenstands mit Bezug auf die beigefügten Figuren. Einzelne Merkmale der einzelnen Ausführungsform können dabei im Rahmen der Erfindung miteinander kombiniert werden. Es zeigen
- **Fig.1**: eine Vorrichtung zum Verlängern einer Leitung im Schnittstellenbereich zwischen einem Sattelzug und einem Sattelauflieger gemäß einer bevorzugten Ausführungsform der vorliegende Erfindung, in einer Schnittansicht, einer Seitenansicht und einer Draufsicht; und
- **Fig.2**: eine Detailansicht für die Vorrichtung aus Figur 1.

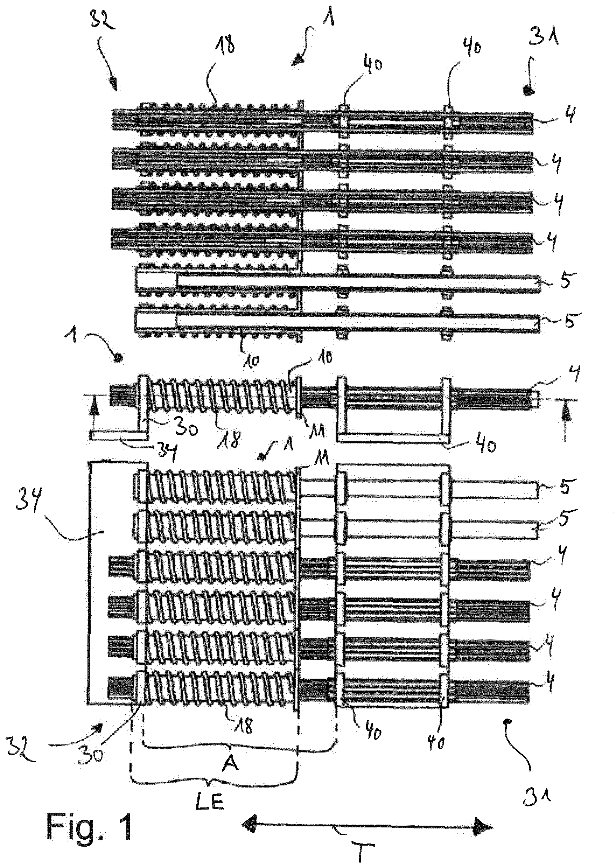

In **Fig. 1** ist eine Vorrichtung 1 zum Verlängern einer Leitung im Schnittstellenbereich zwischen einem Sattelzug und einem Sattelauflieger gemäß einer bevorzugten Ausführungsform der vorliegenden Erfindung in einer Schnittansicht (oben), einer Seitenansicht (Mitte) und einer Draufsicht (unten) dargestellt. Unter einem Schnittstellenbereich zwischen dem Sattelzug und dem Sattelauflieger ist insbesondere der Bereich zu verstehen, in dem der Sattelauflieger an den Sattelzug angebunden wird, vorzugsweise automatisch angebunden wird. Beispielsweise erfolgt die Anbindung des Sattelaufliegers an den Sattelzug über einen aufliegerseitigen Königszapfen, der in eine sattelzugseitige Sattelkupplung eingreift. Neben der mechanischen Kupplung ist es auch erforderlich das aufliegerseitige und sattelzugseitige Leitungen bzw. Versorgungsleitungen, wie z. B. eine Gasdruckleitung 5 bzw. Luftdruckleitung oder eine elektrische Leitung 4, über einen entsprechenden Steck- bzw. Anschlussmechanismus im Schnittstellenbereich miteinander verbunden werden können. Dabei ist es aufliegerseitig vorgesehen, dass ein Kopplungskomponente bzw. ein Ausleger schwenkbar gelagert ist, insbesondere schwenkbar zum Königszapfen gelagert ist. Die Kopplungskomponente dient zur Führung der Leitungen. Hierzu sind die Leitungen innenliegend oder außenliegend an die Kopplungskomponente angebunden. Durch die Schwenkbewegung ist es erforderlich, dass die Leitungen die Bewegungsfreiheit der Kopplungskomponente nicht einschränken bzw. nicht durch die Schwenkbewegungen auf Dauer beschädigt werden.

Zur Vermeidung solch einer Einschränkung der Bewegungsfreiheit der Kopplungskomponente ist vorzugsweise eine Vorrichtung 1 zum Verlängern einer Leitung vorgesehen. Dabei umfasst die Leitung einen ersten Leitungsabschnitt 31 und einen zweiten Leitungsabschnitt 32, die über ein Mantelelement 10 miteinander teleskopartig verbunden sind. Dabei kann beispielsweise das Mantelelement 10 Teil des zweiten Leitungsabschnitts 32 sein oder mit dem zweiten Leitungsabschnitts 32 kraftschlüssige, formschlüssig und/oder stoffschlüssig verbunden sein. Vorzugsweise ist der erste Leitungsabschnitt 31 in dem Mantelelement 10 translatorisch gelagert zur Überführung der Leitung zwischen einem eingefahrenen Zustand und einem ausgefahrenen Zustand, wobei eine Länge der Leitung im ausgefahren Zustand größer ist als eine Länge in einem eingefahrenen Zustand. Mittels des teleskopartig wirkenden Mantelelements 10 lässt sich die Leitung mit Vorteil zwischen dem eingefahrenen Zustand und dem ausgefahrenen Zustand überführen, insbesondere reversibel überführen.

In dem dargestellten Ausführungsbeispiel der Figur 1 ist eine Vielzahl von Mantelelementen 10 vorgesehen, die jeweils zur Verlängerung einer einzelnen Leitung vorgesehen sind. Dabei umfasst das hier illustrierte System vier elektrische Leitungen 4 und zwei Luftdruckleitungen 5. Vorzugsweise sind die Mantelelemente 10 miteinander verbunden, insbesondere über einen stirnseitig an dem Mantelelement verlaufenden Kragen 11. Vorzugsweise ist das Mantelelement 10 hülsenförmig ausgestaltet, und der Kragen 11 ist beispielsweise radial nach außen gerichtet. Weiterhin ist es vorgesehen, dass die Vorrichtung 1 eine Halteeinrichtung 30 und eine weitere Halteeinrichtung 40 umfasst, wobei die Halteeinrichtung 30 gegenüber der weiteren Halteeinrichtung 40 positionsfest angeordnet ist. In dem dargestellten Ausführungsbeispiel ist die weitere Halteeinrichtung 40 zur Fixierung des ersten Leitungsabschnitts 41 und die Halteeinrichtung 30 zur Lagerung des oder der Mantelelemente 10 vorgesehen. Sofern mehrere Leitungen vorgesehen sind, sind mehrere Halteeinrichtung 30 in einem Träger 34 vereint. Dabei ist es vorgesehen, dass ein Verhältnis zwischen einer Längserstreckung LE des Mantelelements 10 zu einem Abstand A zwischen der Halteeinrichtung 30 und der weiteren Halteeinrichtung 40 einen Wert zwischen 0,6 und 0,9, bevorzugt zwischen 0,65 und 0,85 und besonders bevorzugt zwischen 0,68 und 0,78 annimmt. Insbesondere ist es vorgesehen, dass das oder die Mantelelemente 10 translatorisch bzw. längsverschiebbar in der Halteeinrichtung 30 gelagert sind. Beispielsweise umfasst die Halteeinrichtung 30 eine Aussparung, deren Querschnitt an die Außenfläche des Mantelelements 10 angepasst ist, so dass sich das Mantelelement 10 in der Aussparung entlang seiner Längserstreckung verschieben lässt.

Weiterhin ist es vorgesehen, dass das Mantelelement 10 über ein Federelement 18 mit der Halteeinrichtung 30 verbunden ist. Insbesondere stützt sich das Mantelelement 3 über das Federelement 18 an der Halteinrichtung 30 ab. Dabei liegt das Federelement 18 mit seinem einen Ende beispielsweise an der Halteeinrichtung 30 und mit einem gegenüberliegenden Ende an dem Kragen 11 des Mantelelements 10 an. Vorzugsweise handelt es sich bei dem Federelement 18 um eine Spiralfeder, die im montierten Zustand um das Mantelelement 10 gewickelt ist. Insbesondere ist es vorgesehen, dass das Mantelelement 10 mit dem Kopplungskomponente wirkverbunden ist. Vorzugsweise ist das Mantelelement 10 über ein Kabelelement so mit der Kopplungskomponente verbunden, dass bei einem Verschwenken der Kopplungskomponente das Kabelelement am Mantelelement 10 zieht und so eine Verlängerung der Leitung verursacht. Dabei wird das Mantelelement 10 von der weiteren Halteeinrichtung 40 wegbewegt. Gleichzeitig wird das Federelement 18 vorgespannt. Mittels dieser Vorspannung lässt sich mit Vorteil bei Beendigung der Schwenkbewegung die Kopplungskomponente 1 in eine Ausgangsstellung überführen, in der das Federelement 18 nicht mehr vorgespannt ist und sich die Leitung im eingefahrenen Zustand befindet.

Damit die Leitungen sowohl im ausgefahrenen als auch im eingefahrenen Zustand ihre Funktionalität aufrechterhalten können, ist es für die Gasdruckleitungen 5 vorgesehen, dass sie gasdicht ineinander geführt werden. Hierzu ist der erste Leitungsabschnitt 31 zumindest an seinem im montierten Zustand in das Mantelelement 1 eingreifenden Ende koaxial zu der Innenseite des Mantelelements 1 ausgeformt.

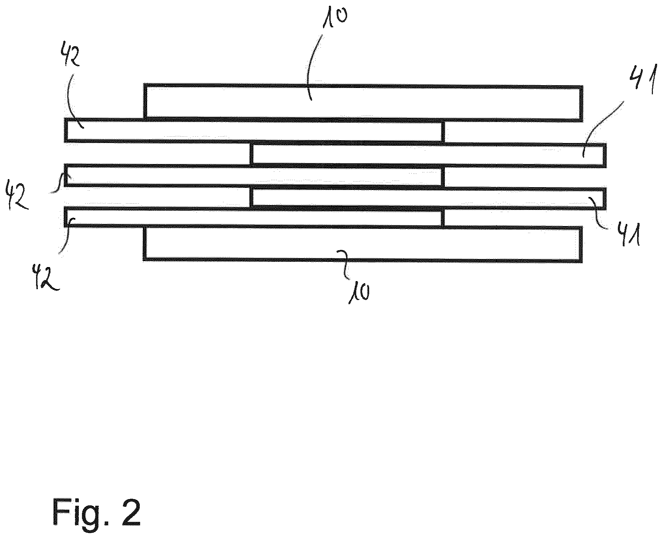

In der **Fig.** 2 ist eine Detailansicht für die Vorrichtung aus Figur 1 dargestellt, insbesondere im Bereich für die elektrische Leitung 4. Hier ist es vorgesehen, dass der erste Leitungsabschnitt 31 und der zweite Leitungsabschnitt 32 über ein oder mehrere leitfähige Hülsenelemente 41 in elektrische Kontakt stehen. Dabei liegen die leitenden Teile 42 des ersten Leitungsabschnitt 31 an leitfähigen Hülsenelementen 41 des zweite Leitungsabschnitts 32 an und werden bei der Überführung zwischen dem eingefahrenen Zustand und dem ausgefahrenen Zustand entlang einer Innenseite des Hülsenelements 41 bewegt, ohne den Kontakt zu dieser Innenfläche aufzuheben.

### Bezugszeichenliste

- 1: Vorrichtung
- 4: elektrische Leitung
- 5: Gasdruckleitung
- 10: Mantelelement
- 11: Kragen
- 18: Federelement
- 30: Halteeinrichtung
- 31: erster Leitungsabschnitt
- 32: zweiter Leitungsabschnitt
- 34: Träger
- 40: weitere Halteeinrichtung
- 41: leifähiges Hülsenelement
- 42: elektrisch leitender Teil
- LE: Längserstreckung
- A: Abstand

## Patentansprüche

1. Vorrichtung (1) zur Überführung einer Leitung zwischen einem eingefahrenen Zustand und einem ausgefahrenen Zustand, wobei die Leitung in einem Schnittstellenbereich zwischen einem Sattelzug und einem Sattelauflieger angeordnet ist, wobei die Leitung einen ersten Leitungsabschnitt (31) und einen zweiten Leitungsabschnitt (32) aufweist und wobei die Leitung im ausgefahrenen Zustand länger als im eingefahrenen Zustand ist, wobei die Vorrichtung ein Mantelelement (10) umfasst, über das der erste Leitungsabschnitt (31) und der zweite Leitungsabschnitt (32) für das Überführen zwischen dem eingefahrenen Zustand und dem ausgefahrenen Zustand unter Ausbildung eines Teleskopmechanismus verbindbar sind, **dadurch gekennzeichnet, dass** die Leitung
- eine Gasdruckleitung (5) ist, wobei der erste Leitungsabschnitt (31) gasdicht in dem Mantelelement (10) geführt ist und/oder
- eine elektrische Leitung (4) ist, wobei zur Aufrechterhaltung eines elektrischen Kontakts ein leitfähiges Hülsenelement (41) vorgesehen ist, wobei das leitfähige Hülsenelement (41) sowohl in einem eingefahrenen Zustand als auch in einem ausgefahrenen Zustand in elektrischem Kontakt zu einem elektrisch leitenden Teil (42) des ersten Leitungsabschnitts (31) steht.

2. Vorrichtung (1) gemäß Anspruch 1, wobei das Mantelelement (10) in einer Halteeinrichtung (30) translatorisch verschiebbar gelagert ist.

3. Vorrichtung (1) gemäß Anspruch 2, wobei das Mantelelement (10) über ein Federelement (18) mit der Halteeinrichtung (30) verbunden ist, und wobei das Federelement (18) in einem ausgefahrenen Zustand der Leitung vorgespannt ist.

4. Vorrichtung (1) gemäß einem der vorhergehenden Ansprüche, wobei das Mantelelement (10) über ein Kabelelement mit einer schwenkbar gelagerten Kopplungskomponente, insbesondere einem Ausleger, verbunden ist.

5. Vorrichtung (1) gemäß Anspruch 4, wobei das Kabelelement einen Stahldraht als zentrale Faser umfasst.

6. Vorrichtung (1) gemäß Anspruch 4 oder 5, wobei das Mantelelement (10) derart mit der Kopplungskomponente verbunden ist, dass beim Verschwenken der Kopplungskomponente der erste Leitungsabschnitt (31) und der zweite Leitungsabschnitt (32) zueinander translatorisch verschoben werden.

7. Vorrichtung (1) gemäß Anspruch 2 oder 3, wobei der erste Leitungsabschnitt (31) mittels einer weiteren Halteeinrichtung (40) fixiert ist, insbesondere gegenüber der Halteeinrichtung (30) fixiert ist.

8. Vorrichtung (1) gemäß einem der vorhergehenden Ansprüche, wobei die Vorrichtung (1) eine Vielzahl von Mantelelementen (10) aufweist, die jeweils für eine einzelne Leitung vorgesehen sind und die miteinander verbunden sind. 12. Verwendung einer Vorrichtung (1) zur Überführung einer Leitung mit einem ersten Leitungsabschnitt (31) und einem zweiten Leitungsabschnitt (32) zwischen einem eingefahren Zustand und einem ausgefahrenen Zustand, wobei zur Überführung ein Mantelelement verwendet wird, über das der erste Leitungsabschnitt (31) und der zweite Leitungsabschnitt (32) teleskopartig miteinander verbunden sind.

## Claims

1. A Device (1) for transferring a line between a retracted state and an extended state, wherein the line is arranged in an interface region between a semitrailer train and a semitrailer, wherein the line has a first line section (31) and a second line section (32) and wherein the line is longer in the extended state than in the retracted state, the device comprising an envelope element (10) via which the first line section (31) and the second line section (32) are connectable for transfer between the retracted state and the extended state by forming a telescopic mechanism, **characterized in that**
the line
- is a gas pressure line (5), wherein the first line section (31) is guided in a gas-tight manner in the envelope element (10) and/or
- is an electrical line (4), wherein a connector bushing element (41) is provided for maintaining electrical contact, wherein the connector bushing element (41) is in electrical contact with an electrically conductive part (42) of the first line section (31) in both a retracted state and an extended state.

2. The device (1) according to claim 1, wherein the envelope element (10) is supported in a holding device (30) so as to be translationally displaceable.

3. The device (1) according to claim 2, wherein the envelope element (10) is connected to the holding device (30) via a spring element (18), and wherein the spring element (18) is pretensioned in an extended state of the line.

4. The device (1) according to any one of the preceding claims, wherein the envelope element (10) is connected via a cable element to a pivotally mounted coupling component, in particular an outrigger.

5. The device (1) according to claim 4, wherein the cable element comprises a steel wire as the central fibre.

6. The device (1) according to claim 4 or 5, wherein the envelope element (10) is connected to the coupling component in such a way that when the coupling component is pivoted, the first line section (31) and the second line section (32) are displaced translationally relative to one another.

7. The device (1) according to claim 2 or 3, wherein the first line section (31) is fixed by means of a further holding device (40), in particular is fixed relative to the holding device (30).

8. The device (1) according to any one of the preceding claims, the device (1) comprising a plurality of envelope elements (10) each provided for a single line and connected to each other. 12. A Use of a device (1) for transferring a line having a first line section (31) and a second line section (32) between a retracted state and an extended state, wherein an envelope element is used for the transfer, via which the first line section (31) and the second line section (32) are telescopically connected to each other.

## Revendications

1. Dispositif (1) pour le transfert d'une ligne entre un état rétracté et un état déployé, la ligne étant disposée dans une zone d'interface entre un véhicule tracteur et une semi-remorque, la ligne présentant une première portion de ligne (31) et une deuxième portion de ligne (32) et la ligne étant plus longue à l'état déployé qu'à l'état rétracté, le dispositif comprenant un élément de gaine (10) par lequel la première portion de ligne (31) et la deuxième portion de ligne (32) peuvent être reliées l'une à l'autre en formant un mécanisme télescopique pour le transfert entre l'état rétracté et l'état déployé,
**caractérisé en ce que**
la ligne est
- une ligne ou canalisation sous pression de gaz (5), la première portion de ligne (31) étant menée de façon étanche aux gaz dans l'élément de gaine (10), et/ou
- une ligne électrique (4), un élément de douille (41) conducteur étant prévu pour maintenir un contact électrique, l'élément de douille (41) conducteur étant en contact électrique avec une partie (42) électriquement conductrice de la première portion de ligne (31), aussi bien dans un état rétracté que dans un état déployé.

2. Dispositif (1) selon la revendication 1,
dans lequel ledit élément de gaine (10) est monté dans un organe de maintien (30) de façon mobile en translation.

3. Dispositif (1) selon la revendication 2,
dans lequel l'élément de gaine (10) est relié à l'organe de maintien (30) par l'intermédiaire d'un élément formant ressort (18), et
l'élément formant ressort (18) est précontraint dans un état déployé de la ligne.

4. Dispositif (1) selon l'une des revendications précédentes,
dans lequel l'élément de gaine (10) est relié à un composant de couplage, en particulier à un avant-bras, monté de manière pivotante par l'intermédiaire d'un élément de câble.

5. Dispositif (1) selon la revendication 4,
dans lequel l'élément de câble comprend un fil d'acier en tant que fibre centrale.

6. Dispositif (1) selon la revendication 4 ou 5,
dans lequel l'élément de gaine (10) est relié au composant de couplage de telle sorte que lors du pivotement du composant de couplage, la première portion de ligne (31) et la deuxième portion de ligne (32) sont déplacées en translation l'une par rapport à l'autre.

7. Dispositif (1) selon la revendication 2 ou 3,
dans lequel la première portion de ligne (31) est fixée, en particulier par rapport à l'organe de maintien (30), au moyen d'un autre organe de maintien (40).

8. Dispositif (1) selon l'une des revendications précédentes,
le dispositif (1) comprenant une multitude d'éléments de gaine (10) qui sont prévus chacun pour une ligne individuelle et qui sont reliés entre eux.12. Utilisation d'un dispositif (1) pour le transfert d'une ligne, présentant une première portion de ligne (31) et une deuxième portion de ligne (32), entre un état rétracté et un état déployé,
un élément de gaine étant utilisé pour le transfert, par lequel la première portion de ligne (31) et la deuxième portion de ligne (32) sont reliées l'une à l'autre de manière télescopique.
